# FASCICULE DE BREVET EUROPEEN

(11) **EP 1 427 950 B1**
(45) Date de publication et mention de la délivrance du brevet: **05.10.2005**
(21) Numéro de dépôt: 02735492.7
(22) Date de dépôt: 23.04.2002
(51) Int. Cl.: F16F 1/12

(54) **DISPOSITIF ELASTIQUE PRECONTRAINT A CAGE, ET APPLICATION**
VORGESPANNTE , ELASTISCHE VORRICHTUNG MIT KÄFIG UND VERWENDUNG DERSELBEN
PRESTRESSED ELASTIC DEVICE WITH CAGE AND USE THEREOF

(30) Priorité: 26.04.2001 FR 0105666
(43) Date de publication de la demande: 16.06.2004
(73) Titulaire: ROBERT BOSCH GMBH, 70442 Stuttgart (DE)
(72) Inventeur: BOURGOIS, Lionel, F-93700 Drancy (FR); BOURLON, Philippe, F-77230 Dammartin en Goele (FR); THURNER, Martin, 87549 Rettenberg (DE); GAFFE, François, F-93110 Drancy (FR)
(74) Mandataire: Hurwic, Aleksander Wiktor
(86) Numéro de dépôt international: PCT/FR2002/001394
(87) Numéro de publication internationale: WO 2002/088566

(56) Documents cités:
- EP-A- 0 422 976
- DE-A- 4 018 008
- DE-U- 7 112 269
- FR-A- 2 607 172
- GB-A- 2 129 889

## Description

La présente invention concerne, de façon générale, un dispositif mécanique propre à exercer une force élastique contrôlée.

Plus précisément, l'invention concerne, suivant un premier de ses aspects, un dispositif élastique précontraint, comprenant un organe élastique précontraint présentant une forme allongée suivant un axe et formant un canal axial s'étendant entre des première et seconde extrémités de cet organe élastique, et une cage de précontrainte de longueur axiale variable jusqu'à une longueur maximale, engagée dans le canal axial, et prenant appui sur les première et seconde extrémités de l'organe élastique pour les maintenir à une distance maximale l'une de l'autre tout en permettant leur rapprochement.

Les dispositifs de ce type sont connus depuis des décennies, et trouvent application dans de nombreux secteurs de la mécanique.

Un dispositif de ce type est décrit dans le document EP-A-0 422 976.

En dépit de leur relative simplicité structurelle, ces dispositifs recèlent encore à ce jour quelques difficultés de réalisation, en particulier lorsqu'ils sont fabriqués en très grande série.

Dans ce contexte, l'invention a notamment pour but de proposer un dispositif élastique précontraint, dont la fabrication ou le montage soient optimisés grâce au moins à une réduction du coût d'outillage, et / ou à une réduction du temps de cycle de montage.

A cette fin, le dispositif de l'invention, par ailleurs conforme à la définition générique qu'en donne le préambule ci-dessus, est essentiellement caractérisé en ce que la cage comprend des première et seconde entretoises dont chacune comprend deux branches présentant des extrémités libres respectives, et des extrémités liées respectives par lesquelles elles se rejoignent en une base commune, les extrémités libres des branches des première et seconde entretoises étant repliées à distance de l'axe pour former des premiers et seconds rebords respectifs, qui maintiennent respectivement les première et seconde extrémités de l'organe élastique précontraint, et les entretoises étant liées l'une à l'autre par leurs bases.

De préférence, les extrémités libres des branches de chaque entretoise sont élastiquement sollicitées à distance l'une de l'autre et de l'axe, et appliquées contre l'organe élastique précontraint.

Les entretoises peuvent ainsi être enfilées l'une dans l'autre et prendre mutuellement appui l'une sur l'autre par leurs bases.

Chaque entretoise est par exemple réalisée dans un acier à ressort, l'organe élastique précontraint pouvant être un ressort métallique et / ou un ressort hélicoïdal.

Ce dispositif peut en outre comporter des moyens de réglage de la longueur maximale de la cage

Ces moyens de réglage peuvent par exemple comprendre un pli médian formé dans la base de chaque entretoise entre les branches de cette entretoise, et saillant en direction des extrémités libres des branches de cette entretoise.

Ces moyens de réglage peuvent, en variante, éventuellement comprendre un bossage pratiqué dans la base de l'une des entretoises, ou une cale interposée entre les bases des entretoises.

Dans ce dernier cas, la base de chaque entretoise peut avantageusement être sensiblement circulaire pour assurer un bon maintien de la cale.

Le dispositif de l'invention est particulièrement adapté au rappel d'un piston de maître-cylindre de freinage.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective d'un dispositif conforme à l'invention;
- la figure 2 est une vue en perspective d'un organe élastique avant son intégration dans le dispositif de l'invention;
- la figure 3 est une vue en perspective de deux entretoises, formant les éléments d'une cage suivant une première variante, avant l'intégration de cette cage dans le dispositif de l'invention;
- la figure 4 est une vue en perspective de deux entretoises, formant les éléments d'une cage suivant une seconde variante, avant l'intégration de cette cage dans le dispositif de l'invention ; et
- La figure 5 est une vue en coupe longitudinale d'une cage conforme à l'invention, comprenant des moyens de réglage de longueur réalisés suivant un mode de réalisation préféré.

Comme annoncé précédemment, l'invention concerne un dispositif élastique précontraint du type de ceux qui comprennent essentiellement un organe élastique précontraint 1, par exemple un ressort hélicoïdal en acier, et une cage de précontrainte 2.

Quelle que soit la forme particulière adoptée par l'organe élastique précontraint 1, cet organe présente une forme allongée suivant un axe longitudinal X, et forme un canal axial 10 qui s'étend entre les extrémités 11 et 12 de cet organe élastique 1.

La cage de précontrainte 2, qui présente une longueur axiale variable jusqu'à une longueur maximale L0, est engagée dans le canal axial 10 et prend appui sur les extrémités 11 et 12 du ressort 1 pour les maintenir l'une par rapport à l'autre à une distance maximale fixée par la longueur maximale L0 de cette cage, tout en permettant le rapprochement de ces extrémités 11 et 12.

Selon l'invention, la cage 2 comprend deux entretoises 3 et 4.

Chaque entretoise comprend elle-même deux branches, telles que 31 et 32 pour l'entretoise 3, et 41, 42 pour l'entretoise 4.

Les deux branches de chaque entretoise présentent des extrémités libres respectives, telles que 310, 320 et 410, 420, ainsi que des extrémités liées respectives, telles que 311, 321 et 411, 421.

Chacune des entretoises 3 et 4 présente une base, telle que 30 et 40, par laquelle se rejoignent les extrémités liées, telles que 311, 321 et 411, 421, de cette entretoise.

De l'autre côté, les extrémités libres 310, 320 et 410, 420 des branches des entretoises 3 et 4 sont repliées à distance de l'axe X pour former des rebords respectifs, référencés 331 pour l'entretoise 3, et 432 pour l'entretoise 4.

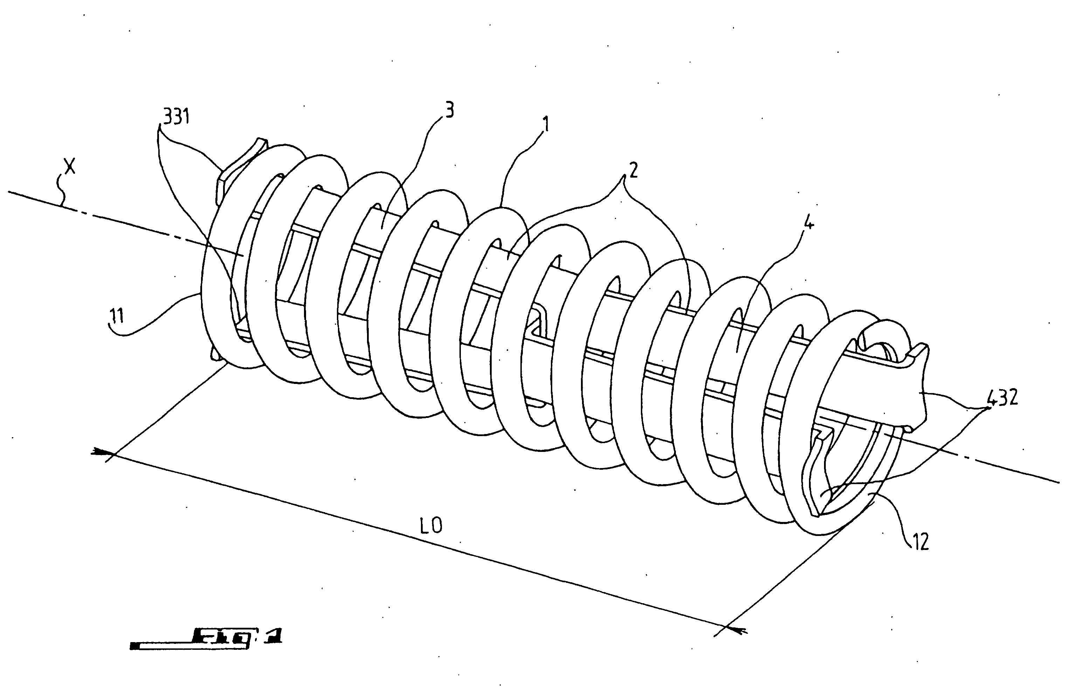

Comme le montre la figure 1, les rebords 331 et 432 définis par les entretoises 3 et 4 ont pour fonction de maintenir les extrémités correspondantes 11 et 12 du ressort 1, les entretoises 3 et 4 étant par ailleurs liées l'une à l'autre par leurs bases respectives 30 et 40.

Chaque entretoise 3, 4 est par exemple réalisée en acier à ressort et présente une élasticité transversalement à l'axe X, plus précisément suivant la direction de rapprochement et d'éloignement mutuel des branches 31, 32 et 41, 42.

Il est ainsi possible de faire en sorte que les extrémités libres 310, 320 et 410, 420 des branches de chacune des entretoises 3 et 4 soient élastiquement sollicitées à distance l'une de l'autre et de l'axe X, et appliquées contre la périphérie interne de chacune des extrémités correspondantes 11 et 12 du ressort 1.

Comme le montre la figure 1, les entretoises 3 et 4 sont de préférence simplement enfilées l'une dans l'autre, de sorte qu'elles prennent mutuellement appui l'une sur l'autre par leurs bases respectives 30 et 40.

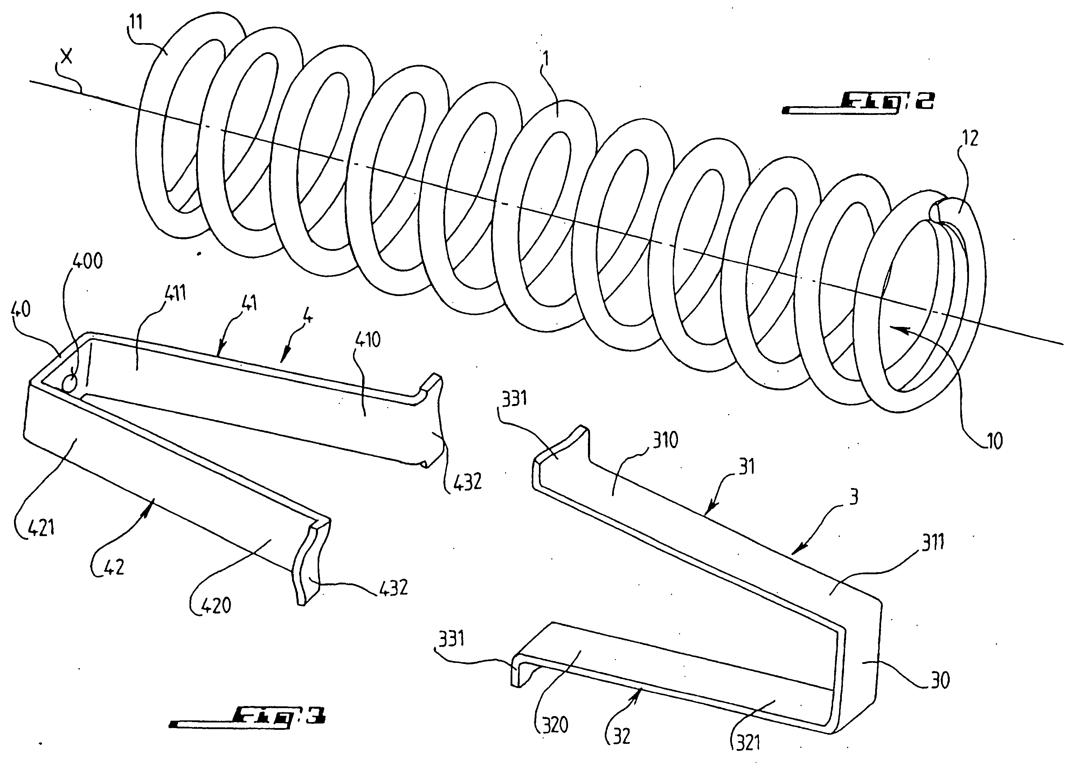

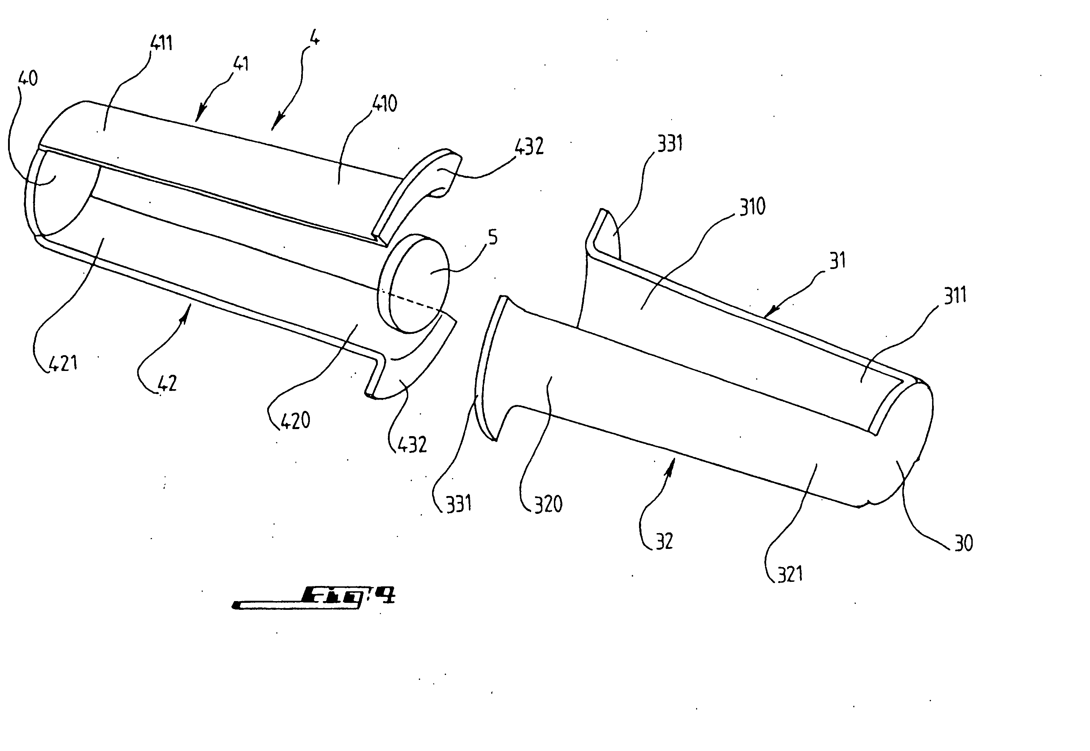

Dans le cas où il s'avère utile de pouvoir régler la longueur maximale L0 de la cage 2, un bossage tel que 400 (figure 3) peut être pratiqué dans la base 40 de l'une des entretoises 3 et 4, de manière à rapprocher l'un de l'autre les rebords 331 et 432 d'une distance correspondant à la hauteur de ce bossage.

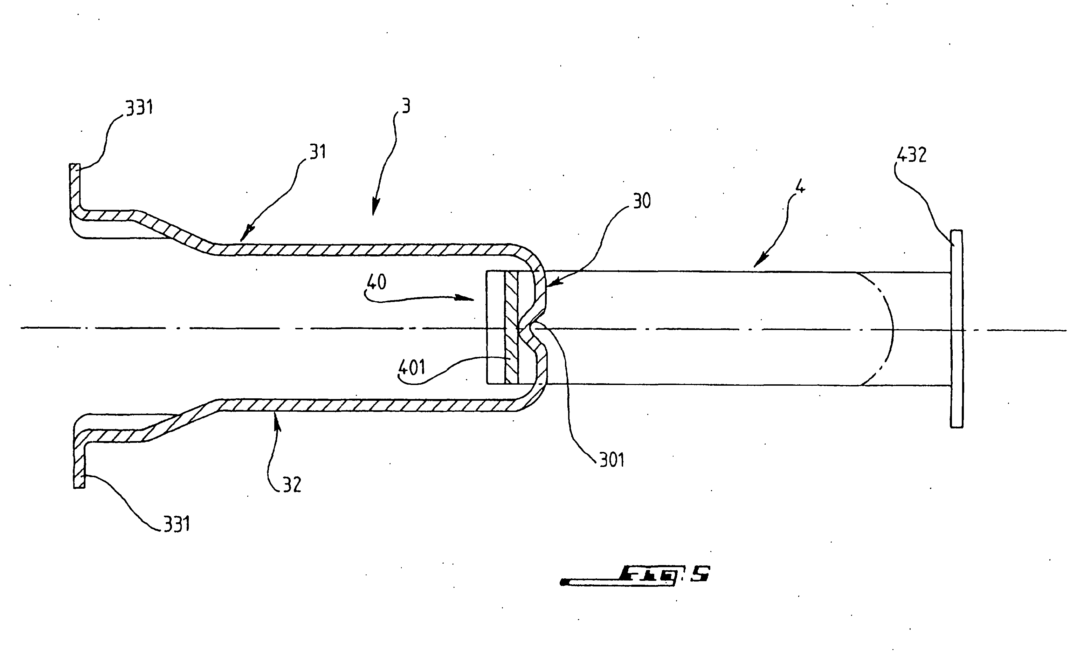

En variante (figure 4), une cale d'épaisseur 5 peut être interposée entre les bases 30 et 40 des entretoises 3 et 4.

Dans ce dernier cas, il peut être opportun de donner aux bases 30 et 40 des entretoises 3 et 4 une forme sensiblement circulaire, de manière à fournir un appui large et stable à la cale 5.

Cependant, le mode de réalisation préféré d'une cage de longeur maximale 20 réglable est illustré à la figure 5.

Dans une telle cage, la base 30, 40 de chaque entretoise 3, 4 comprend un pli médian tel que 301, 401 disposé entre les branches 31 et 32 ou 41 et 42 de l'entretoise considérée, et saillant en direction des extrémités libres de ces branches.

Grâce à cet agencement, l'appui réciproque des plis 301 et 401 l'un sur l'autre constitue un contact rotulant des entretoises 3 et 4 l'une par rapport à l'autre, et la longueur maximale LO de la cage peut être augmentée par écrasement plastique des plis 301 et 401.

Bien que le dispositif de l'invention soit utilisable à de nombreuses fins, il trouve une application privilégiée dans les maîtres-cylindres hydrauliques de freinage, dans lesquels il permet le rappel d'un piston primaire et / ou du piston secondaire, cette application correspondant à une fabrication en très grande série exigeant une très grande reproductibilité de performances.

## Revendications

1. Dispositif élastique précontraint, comprenant un organe élastique précontraint (1) présentant une forme allongée suivant un axe (X) et formant un canal axial (10) s'étendant entre des première et seconde extrémités (11, 12) de cet organe élastique (1), et une cage de précontrainte (2) de longueur axiale variable jusqu'à une longueur maximale (L0), engagée dans le canal axial (10), et prenant appui sur les première et seconde extrémités (11, 12) de l'organe élastique (1) pour les maintenir à une distance maximale l'une de l'autre tout en permettant leur rapprochement, **caractérisé en ce que** la cage (2) comprend des première et seconde entretoises (3, 4) dont chacune comprend deux branches (31, 32; 41, 42) présentant des extrémités libres respectives (310, 320; 410, 420), et des extrémités liées respectives (311, 321; 411, 421) par lesquelles elles se rejoignent en une base commune (30, 40), les extrémités libres (310, 320; 410, 420) des branches (31, 32; 41, 42) des première et seconde entretoises (3, 4) étant repliées à distance de l'axe (X) pour former des premiers et seconds rebords respectifs (331; 432), qui maintiennent respectivement les première et seconde extrémités (11, 12) de l'organe élastique précontraint (1), et les entretoises (3, 4) étant liées l'une à l'autre par leurs bases (30, 40).

2. Dispositif élastique suivant la revendication 1, **caractérisé en ce que** les extrémités libres (310, 320; 410, 420) des branches (31, 32; 41, 42) de chaque entretoise (3, 4) sont élastiquement sollicitées à distance l'une de l'autre et de l'axe (X), et appliquées contre l'organe élastique précontraint (1).

3. Dispositif élastique suivant la revendication 1 ou 2, **caractérisé en ce que** les entretoises (3, 4) sont enfilées l'une dans l'autre et prennent mutuellement appui l'une sur l'autre par leurs bases (30, 40).

4. Dispositif élastique suivant l'une quelconque des revendications précédentes, **caractérisé en ce que** chaque entretoise (3, 4) est réalisée dans un acier à ressort.

5. Dispositif élastique suivant l'une quelconque des revendications précédentes, **caractérisé en ce que** l'organe élastique précontraint (1) est un ressort métallique.

6. Dispositif élastique suivant l'une quelconque des revendications précédentes, **caractérisé en ce que** l'organe élastique précontraint (1) est un ressort hélicoïdal.

7. Dispositif élastique suivant l'une quelconque des revendications précédentes, **caractérisé en ce qu'**il comporte des moyens de réglage de la longueur maximale de la cage.

8. Dispositif élastique suivant la revendication 7, **caractérisé en ce que** les moyens de réglage de la longueur maximale comprennent un pli médian (301, 401) formé dans la base (30, 30) de chaque entretoise (3, 4) entre les branches (31, 32 ; 41, 42) de cette entretoise (3, 4) et saillant en direction des extrémités libres (310, 320 ; 410, 420) des branches (31, 32 ; 41, 42) de cette entretoise.

9. Dispositif élastique suivant la revendication 7, **caractérisé en ce que** les moyens de réglage de la longueur maximale comprennent un bossage (400) pratiqué dans la base (40) de l'une des entretoises (3, 4).

10. Dispositif élastique suivant la revendication 7 ou 9, **caractérisé en ce que** les moyens de réglage de la longueur maximale comprennent une cale (5) interposée entre les bases (30, 40) des entretoises (3, 4).

11. Dispositif élastique suivant l'une quelconque des revendications précédentes, **caractérisé en ce que** la base (30, 40) de chaque entretoise (3, 4) est sensiblement circulaire.

12. Application d'un dispositif élastique suivant l'une quelconque des revendications précédentes au rappel d'un piston de maître-cylindre de freinage.

## Patentansprüche

1. Elastische, vorgespannte Vorrichtung, mit einem elastischen, vorgespannten Organ (1), der eine langgestreckte Form entlang einer Achse (X) besitzt und einen axialen Kanal (10) bildet, der sich zwischen einem ersten und einem zweiten Ende (11, 12) dieses elastischen Organs (1) erstreckt, und mit einem Vorspannhalter (2), der einen axiale Länge besitzt, welche bis zu einer maximalen Länge (L0) variabel ist, der in den axialen Kanal (10) eingesetzt ist und der sich am ersten und am zweiten Ende (11, 12) des elastischen Organs (1) abstützt, um diese in einem maximalen Abstand voneinander zu halten und dabei deren Annäherung zu ermöglichen, **dadurch gekennzeichnet, dass** der Halter (2) ein erstes und ein zweites Zwischenelement (3, 4) aufweist, wobei jedes Zwischenelement zwei Schenkel (31, 32; 41, 42) aufweist, die jeweils freie Enden (310, 320; 410; 420) sowie jeweils verbundene Enden (311, 321; 411, 421) aufweisen, durch welche sie sich zu einer gemeinsamen Basis (30, 40) zusammenfügen, wobei die freien Enden (310, 320; 410, 420) der Schenkel (31, 32; 41, 42) des ersten und zweiten Zwischenelements (3, 4) von der Achse (X) beabstandet umgebogen sind, um jeweils erste und zweite Ränder (331; 432) zu bilden, die jeweils das erste und das zweite Ende (11, 12) des elastischen, vorgespannten Organs (1) halten, und wobei die Zwischenelemente (3, 4) durch ihre Basen (30, 40) miteinander verbunden sind.

2. Elastische Vorrichtung nach Anspruch 1, **dadurch gekennzeichnet, dass** die freien Enden (310, 320; 410, 420) der Schenkel (31, 32; 41, 42) jedes Zwischenelements (3, 4) voneinander weg und von der Achse (X) beabstandet elastisch beaufschlagt sind und sich an dem elastischen, vorgespannten Organ (1) in Anlage befinden.

3. Elastische Vorrichtung nach Anspruch 1 oder 2, **dadurch gekennzeichnet, dass** die Zwischenelemente (3, 4) ineinandergesteckt sind und sich über ihre Basen (30, 40) aneinander abstützen.

4. Elastische Vorrichtung nach einem der vorhergehenden Ansprüche, **dadurch gekennzeichnet, dass** jedes Zwischenelement (3, 4) aus einem Federstahl hergestellt ist.

5. Elastische Vorrichtung nach einem der vorhergehenden Ansprüche, **dadurch gekennzeichnet, dass** das elastische, vorgespannte Organ (1) eine Metallfeder ist.

6. Elastische Vorrichtung nach einem der vorhergehenden Ansprüche, **dadurch gekennzeichnet, dass** das elastische, vorgespannte Organ (1) eine Spiralfeder ist.

7. Elastische Vorrichtung nach einem der vorhergehenden Ansprüche, **dadurch gekennzeichnet, dass** sie Mittel zum Einstellen der maximalen Länge des Halters aufweist.

8. Elastische Vorrichtung nach Anspruch 7, **dadurch gekennzeichnet, dass** die Mittel zum Einstellen der maximalen Länge eine Mittelfalte (301, 401) aufweisen, die in der Basis (30, 40) jedes Zwischenelements (3, 4) zwischen den Schenkeln (31, 32; 41, 42) dieses Zwischenelements (3, 4) ausgebildet ist und in Richtung der freien Enden (310, 320; 410, 420) der Schenkel (31, 32; 41, 42) dieses Zwischenelements vorsteht.

9. Elastische Vorrichtung nach Anspruch 7, **dadurch gekennzeichnet, dass** die Mittel zum Einstellen der maximalen Länge eine Erhebung (400) aufweisen, die in der Basis (40) eines der Zwischenelemente (3, 4) ausgebildet ist.

10. Elastische Vorrichtung nach Anspruch 7 oder 9, **dadurch gekennzeichnet, dass** die Mittel zum Einstellen der maximalen Länge eine Beilagscheibe (5) aufweisen, die zwischen den Basen (30, 40) der Zwischenelemente (3, 4) angeordnet ist.

11. Elastische Vorrichtung nach einem der vorhergehenden Ansprüche, **dadurch gekennzeichnet, dass** die Basis (30, 40) jedes Zwischenelements (3, 4) im Wesentlichen kreisförmig ist.

12. Verwendung einer elastischen Vorrichtung nach einem der vorhergehenden Ansprüche beim Zurückstellen eines Kolbens eines Hauptbremszylinders.

## Claims

1. Prestressed resilient device, comprising a prestressed resilient member (1) exhibiting an elongate shape along an axis (X) and forming an axial passage (10) extending between the first and second ends (11, 12) of said resilient member (1), and a prestressing cage (2) with a variable axial length up to a maximum length (L0), such cage being inserted in the axial passage (10) and resting on the first and second ends (11, 12) of the resilient member (1) so as to keep them at a maximum distance apart, though enabling them to draw nearer to each other, **characterised in that** the cage (2) comprises a first and a second distance piece (3, 4), each distance piece having two arms (31, 32 ; 41, 42) with respective free ends (310, 320 ; 410, 420) and respective coupled ends (311, 321 ; 411, 421) through which they are joined up together into a common base (30, 40), the free ends (310, 320 ; 410, 420) of the arms (31, 32 ; 41, 42) of the first and second distance pieces (3, 4) being bent outwards away from the axis (X) so as to constitute first and second respective flanges (331 ; 432) which retain the first and second ends (11, 12) of the prestressed resilient member (1) respectively, and wherein the distance pieces (3, 4) are coupled through their bases (30, 40).

2. Resilient device according to claim 1, **characterised in that** the free ends (310, 320 ; 410, 420) of the arms (31, 32 ; 41, 42) of each distance piece (3, 4) are resiliently biased so as to move away from each other, and away from the axis (X), and **in that** they are applied onto the prestressed resilient member (1).

3. Resilient device according to claim 1 or claim 2, **characterised in that** the distance pieces (3, 4) are fitted the one inside the other and **in that** they rest the one on the other by their bases (30, 40).

4. Resilient device according to any one of the preceding claims, **characterised in that** each distance piece (3, 4) is made up of a spring steel.

5. Resilient device according to any one of the preceding claims, **characterised in that** the prestressed resilient member (1) is a metal spring.

6. Resilient device according to any one of the preceding claims, **characterised in that** the prestressed resilient member (1) is a helical spring.

7. Resilient device according to any one of the preceding claims, **characterised in that** it comprises means for the adjustment of the maximum length of the cage.

8. Resilient device according to claim 7, **characterised in that** said means for the adjustment of the maximum length comprise a median fold (301, 401) made in the base (30, 40) of each distance piece (3, 4) between the arms (31, 32 ; 41, 42) of said distance piece (3, 4), and protruding in the direction of the free ends (310, 320 ; 410, 420) of the arms (31, 32 ; 41, 42) of this distance piece.

9. Resilient device according to claim 7, **characterised in that** said means for the adjustment of the maximum length comprise a boss (400), made in the base (40) of one of the distance pieces (3, 4).

10. Resilient device according to claim 7, **characterised in that** said means for the adjustment of the maximum length comprise a shim (5), placed between the bases (30, 40) of the distance pieces (3, 4).

11. Resilient device according to any one of the preceding claims, **characterised in that** the base (30, 40) of each distance piece (3, 4) is substantially circular.

12. Application of a resilient device according to any one of the preceding claims to the return of a piston of a braking master cylinder.
